# FASCICULE DE BREVET EUROPEEN

(11) **EP 2 867 716 B1**
(45) Date de publication et mention de la délivrance du brevet: **23.11.2022**
(21) Numéro de dépôt: 13732521.3
(22) Date de dépôt: 28.06.2013
(51) Int. Cl.: G02B 23/08, G02B 23/12, G02B 23/22, G02B 13/06, B63G 8/38, G02B 7/00, F41G 1/38, F41G 3/16, F41G 3/22, H04N 7/18

(54) **DISPOSITIF DE SURVEILLANCE DE L'ENVIRONNEMENT EXTÉRIEUR D'UNE PLATE-FORME NOTAMMENT NAVALE, PÉRISCOPE ET PLATE-FORME COMPORTANT UN TEL DISPOSITIF**
VORRICHTUNG ZUR ÜBERWACHUNG DER EXTERNEN UMGEBUNG EINER PLATTFORM, INSBESONDERE EINER MEERESPLATTFORM, PERISKOP UND PLATTFORM MIT SOLCH EINER VORRICHTUNG
DEVICE FOR MONITORING THE EXTERNAL ENVIRONMENT OF A PLATFORM, IN PARTICULAR A NAVAL PLATFORM, PERISCOPE AND PLATFORM COMPRISING SUCH A DEVICE

(30) Priorité: 28.06.2012 FR 1256171
(43) Date de publication de la demande: 06.05.2015
(73) Titulaire: NAVAL GROUP, 75015 Paris (FR)
(72) Inventeur: AUDIBERT, Roland, F-83200 Toulon (FR)
(74) Mandataire: Lavoix
(86) Numéro de dépôt international: PCT/EP2013/063678
(87) Numéro de publication internationale: WO 2014/001526

(56) Documents cités:
- EP-A2- 2 060 944
- WO-A1-03/063513
- WO-A1-2008/115416
- JP-A- 2000 241 702
- US-A- 4 175 844

## Description

La présente invention est relative à un dispositif de surveillance de l'environnement extérieur d'une plate-forme notamment militaire telle qu'une plate-forme navale.

Des dispositifs de surveillance sont par exemple connus des documents WO 2008/115416 et WO 03/063513.

Une plate-forme navale peut par exemple être un bâtiment de surface ou encore un sous-marin ou autre et le dispositif peut alors être un système de type périscope.

On sait que les périscopes actuellement utilisés dans les sous-marins se présentent par exemple sous la forme d'un tube adapté pour faire saillie à partir du massif du sous-marin.

Un tel périscope est alors déplaçable entre une position escamotée dans ce massif et une position déployée à partir de celui-ci de manière que son extrémité supérieure fasse saillie au-dessus de la surface de l'eau afin de permettre l'observation de l'environnement.

Dans l'état de la technique le tube du périscope comporte dans sa partie supérieure, des hublots derrière lesquels sont placés des moyens optiques et/ou électroniques permettant d'obtenir une vision de l'environnement extérieur du sous-marin ou de former une image de celui-ci.

Ainsi par exemple une caméra peut être placée derrière ce ou ces hublots pour filmer ou de façon générale prendre des images de l'environnement.

Des moyens optiques, par exemple à prismes et miroirs de renvoi, peuvent également être placés dans ce périscope entre la partie supérieure du périscope et des moyens d'observation placés par exemple dans la partie inférieure de celui-ci et mis à la disposition de l'équipage pour observer l'environnement.

Ces différents organes peuvent également être raccordés à des moyens de visualisation tels que par exemple des moniteurs d'affichage ou des écrans de tous types appropriés, mis à la disposition de l'équipage.

On conçoit cependant que tous ces dispositifs présentent un certain nombre d'inconvénients au niveau de leur complexité, de leur encombrement, de leur fiabilité et/ou de leur rapport qualité/prix.

En effet l'utilisation d'un hublot présente un certain nombre de risques au niveau de sa fiabilité et en particulier de son étanchéité, notamment du fait de sa surface et en raison des profondeurs que peuvent atteindre les sous-marins actuels.

Par ailleurs la qualité de l'observation n'est pas non plus optimale et l'encombrement de l'ensemble du dispositif est relativement important.

Le but de l'invention est donc de résoudre ces problèmes.

A cet effet l'invention a pour objet un dispositif de surveillance de l'environnement extérieur d'une plate-forme, notamment militaire, selon la revendication 1.

Le dispositif suivant l'invention peut comprendre l'une ou plusieurs des caractéristiques des revendications 2 à 6.

Selon un autre aspect, l'invention a également pour objet un périscope de plate-forme navale tel que défini dans la revendication 7.

Enfin selon encore un autre aspect, l'invention a également pour objet une plate-forme navale telle que définie dans la revendication 8.

L'invention sera mieux comprise à l'aide de la description qui va suivre, donnée uniquement à titre d'exemple et faite en se référant aux dessins annexés, sur lesquels :
- la figure 1 représente un schéma synoptique illustrant un exemple de réalisation d'un dispositif de surveillance comme par exemple un périscope intégré à un massif de sous-marin,
- la figure 2 illustre une vue partielle d'un dispositif de surveillance selon l'invention, et
- les figures 3 et 4 représentent des vues en coupe de deux modes de réalisation d'un hublot numérique entrant dans la constitution d'un dispositif selon l'invention.

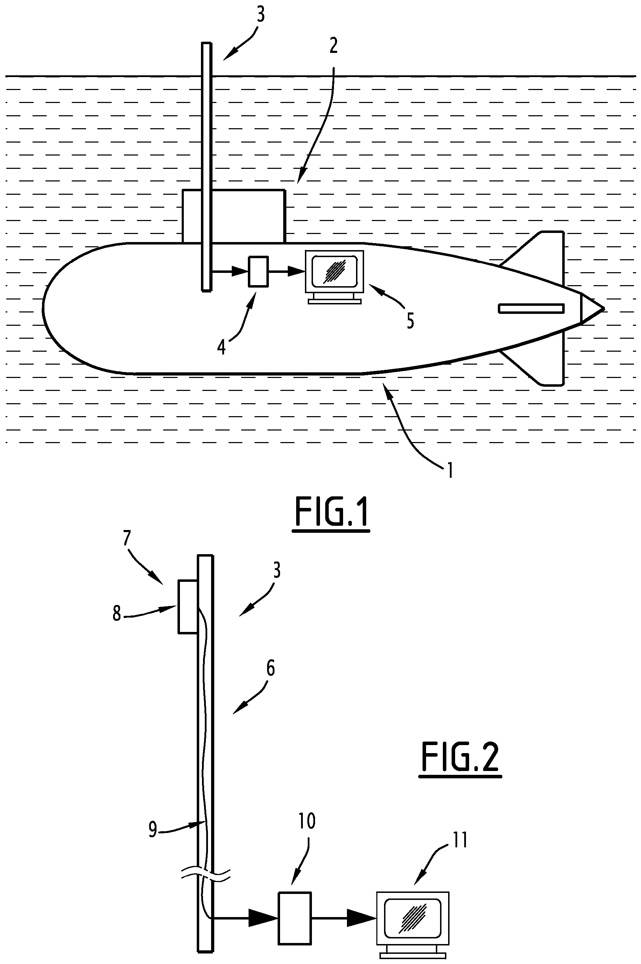

On a en effet illustré sur la figure 1, un sous-marin qui est désigné par la référence générale 1 et qui est équipé d'un massif désigné par la référence générale 2.

Ce massif comporte de façon classique entre autres équipements, un périscope désigné par la référence générale 3, qui se présente de façon générale sous la forme d'un tube télescopique adapté pour être déplacé entre une position escamotée dans le massif et une position déployée à partir de celui-ci de manière que son extrémité supérieure fasse saillie au-delà de la surface de l'eau.

Il est ainsi possible d'observer l'environnement extérieur du sous-marin.

Dans l'état de la technique, le périscope qui se présente par exemple sous la forme d'un tube, comporte à sa partie supérieure par exemple une caméra placée derrière un hublot de la tête de périscope.

Des moyens de raccordement de la sortie de cette caméra sont alors utilisés pour transmettre des signaux correspondants à destination de moyens de traitement désignés par la référence générale 4 sur cette figure, dont la sortie est raccordée à des moyens de visualisation tels que par exemple un moniteur ou un écran quelconque désigné par la référence générale 5, mis à la disposition de l'équipage pour observer l'environnement extérieur.

Comme cela a été indiqué précédemment ceci présente un certain nombre d'inconvénients.

Pour résoudre ces problèmes et comme cela est illustré sur la figure 2, dans le dispositif de surveillance selon l'invention, les moyens de visualisation comprennent au moins un hublot numérique, comportant un système optique et un capteur photographique associés, fixé sur la surface externe du mât.

Il convient de noter que dans la présente demande de brevet le terme « mât » doit être compris au sens large comme englobant toute structure appropriée de support du reste du système.

Ceci est par exemple illustré sur la figure 2, dans laquelle on reconnaît le périscope toujours désigné par la référence générale 3, et qui comporte donc un mât d'observation désigné par la référence générale 6 sur cette figure.

Ce mât est relié à la plate-forme c'est-à-dire au reste du sous-marin et plus particulièrement au massif de celui-ci.

La partie supérieure de ce mât comporte des moyens d'observation de l'environnement extérieur.

Ces moyens d'observation sont désignés par la référence générale 7 sur cette figure 2 et comprennent selon l'invention au moins un hublot numérique désigné par la référence générale 8, qui comporte comme cela sera décrit plus en détail par la suite, un système optique et un capteur photographique associés.

En fait ce hublot numérique est fixé sur la surface externe du mât 6 dans la partie supérieure de celui-ci.

Ce hublot numérique est par ailleurs raccordé par des moyens de liaison tels que par exemple des moyens de transmission d'informations de sortie de ce hublot numérique, désignés par la référence générale 9, à des moyens de traitement d'informations 10, comprenant tout calculateur approprié, et dont la sortie est reliée à un moniteur ou tout autre moyen de visualisation des informations, désignés par la référence générale 11, mis à la disposition de l'équipage pour observer l'environnement extérieur par exemple du sous-marin.

En fait et selon un exemple de réalisation d'un dispositif selon l'invention, ce dispositif peut comporter plusieurs hublots numériques agencés autour du mât de manière à couvrir un champ de vision de 360° autour de ce mât.

Comme cela a été indiqué précédemment, ce hublot numérique est donc placé sur la surface externe de l'extrémité supérieure du mât et peut être par exemple collé sur une surface de réception correspondante de celui-ci.

Bien entendu différents modes de réalisation et différentes façons de fixer ce ou ces hublots sur ce mât, peuvent être envisagés.

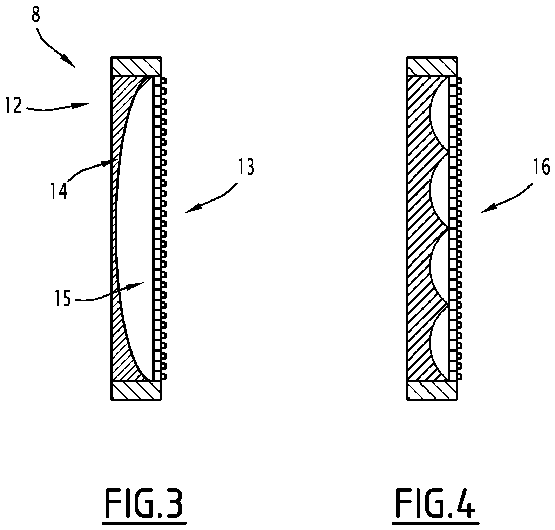

On a illustré sur la figure 3 une vue en coupe d'un exemple de réalisation d'un tel hublot numérique.

Ce hublot numérique est toujours désigné par la référence générale 8 sur cette figure 3.

Ce hublot numérique 8 comporte alors un système optique désigné par la référence générale 12 sur cette figure et un capteur photographique désigné par la référence générale 13.

En fait le système optique 12 peut se présenter sous la forme d'un doublet optique comportant une première lentille 14 et une deuxième lentille 15, accolées l'une à l'autre, devant le capteur photographique 13.

La première lentille 14 peut être une lentille plan-convexe et la deuxième lentille 15 peut être une lentille concave.

La première lentille 14 est orientée vers l'environnement extérieur du dispositif tandis que la deuxième lentille 15 est orientée vers le capteur 13.

La première lentille peut par exemple être réalisée en polymétacrylate de méthyle tandis que la deuxième lentille peut par exemple être réalisée en verre ou autre.

Le capteur photographique 13 est quant à lui constitué de préférence par un capteur à couplage de charge également appelé capteur CCD.

Ce type de capteur est bien connu dans l'état de la technique et ne sera donc pas décrit plus en détail par la suite.

La figure 4 illustre une variante de réalisation d'un système optique 16 à lentilles multi-facettes.

On conçoit alors qu'une telle structure présente un certain nombre d'avantages par rapport aux systèmes de l'état de la technique.

En effet, l'encombrement d'un tel dispositif est extrêmement réduit par rapport à celui des systèmes de l'état de la technique et sa fiabilité est augmentée par rapport à celle de ces dispositifs antérieurs.

Etant donné que le hublot numérique entrant dans la constitution du dispositif selon l'invention, est fixé sur la surface extérieure du mât, il n'y a plus de problème de résistance à l'immersion de ce hublot.

Enfin le coût d'intégration de ce dispositif est également réduit tout en permettant d'obtenir une image de meilleure qualité et une plus grande fiabilité.

## Revendications

1. Dispositif de surveillance de l'environnement extérieur d'une plate-forme, notamment militaire, comportant :
- un mât d'observation (6) relié à la plate-forme et comprenant des moyens (7) d'observation de l'environnement extérieur,
- des moyens (10) de traitement d'informations de sortie des moyens d'observation (7),
- des moyens (11) de visualisation de l'environnement reliés aux moyens de traitement d'informations (10),
les moyens (7) d'observation comprenant au moins un hublot numérique (8), comportant un système optique et un capteur (13) photographique, fixé sur la surface externe d'une extrémité (8) du mât (6),
**caractérisé en ce que** le système (12) optique est un doublet formé de deux lentilles (14, 15) accolées, une première lentille (14) étant orientée vers l'environnement extérieur et une deuxième lentille (15) étant orientée vers le capteur (13), et
**en ce que** la deuxième lentille (15) est accolée au capteur (13).

2. Dispositif selon la revendication 1, **caractérisé en ce qu'**il comporte plusieurs hublots numériques (8) agencés autour du mât (6) de manière à couvrir un champ de vision de 360° autour de ce mât (6).

3. Dispositif selon l'une quelconque des revendications 1 à 2, **caractérisé en ce que** le hublot numérique (8) est collé sur le mât (6).

4. Dispositif selon l'une quelconque des revendications 1 à 3, **caractérisé en ce que** le capteur (13) est un capteur à couplage de charge (CCD).

5. Dispositif selon l'une quelconque des revendications 1 à 4, **caractérisé en ce que** le système (16) optique est un système de lentilles multi-facettes.

6. Dispositif selon l'une quelconque des revendications 1 à 5, **caractérisé en ce que** la première lentille (14) est en polymétacrylate de méthyle.

7. Périscope de plate-forme navale, caractérisé en qu'il comporte au moins un dispositif selon l'une quelconque des revendications 1 à 6.

8. Plate-forme navale, **caractérisée** en qu'elle comporte au moins un périscope selon la revendication 7.

## Patentansprüche

1. Überwachungsvorrichtung der äußeren Umgebung einer insbesondere militärischen Plattform, umfassend:
- einen Beobachtungsmast (6), der mit der Plattform verbunden ist und umfassend Einrichtungen (7) zur Beobachtung der äußeren Umgebung,
- Einrichtungen (10) zur Verarbeitung von Informationen, die von den Beobachtungseinrichtungen (7) ausgegeben werden,
- Einrichtungen (11) zur Visualisierung der Umgebung, die mit den Einrichtungen zur Informationsverarbeitung (10) verbunden sind,
die Einrichtungen (7) zur Beobachtung mindestens umfassend ein digitales Fenster (8), umfassend ein optisches System und einen fotografischen Sensor (13), der an der Außenfläche eines Endes (8) des Masts (6) befestigt ist,
**dadurch gekennzeichnet, dass** das optische System (12) ein Dublett ist, gebildet aus zwei aneinandergefügten Linsen (14, 15), wobei eine erste Linse (14) auf die äußere Umgebung gerichtet ist und eine zweite Linse (15) auf den Sensor (13) gerichtet ist, und
dass die zweite Linse (15) an den Sensor (13) angefügt ist.

2. Vorrichtung nach Anspruch 1, **dadurch gekennzeichnet, dass** sie mehrere digitale Fenster (8) umfasst, die um den Mast (6) angeordnet sind, um ein Sichtfeld von 360° um den Mast (6) abzudecken.

3. Vorrichtung nach einem der Ansprüche 1 bis 2, **dadurch gekennzeichnet, dass** das digitale Fenster (8) an den Mast (6) geklebt ist.

4. Vorrichtung nach einem der Ansprüche 1 bis 3, **dadurch gekennzeichnet, dass** der Sensor (13) ein ladungsgekoppelter Sensor (CCD) ist.

5. Vorrichtung nach einem der Ansprüche 1 bis 4, **dadurch gekennzeichnet, dass** das optische System (16) ein Multifacetten-Linsensystem ist.

6. Vorrichtung nach einem der Ansprüche 1 bis 5, **dadurch gekennzeichnet, dass** die erste Linse (14) aus Polymethylmethacrylat ist.

7. Periskop einer Schiffsplattform, **dadurch gekennzeichnet, dass** es mindestens eine Vorrichtung nach einem der Ansprüche 1 bis 6 umfasst.

8. Schiffsplattform, **dadurch gekennzeichnet, dass** sie mindestens ein Periskop nach Anspruch 7 umfasst.

## Claims

1. A device for monitoring the external environment of a platform, in particular a military platform, comprising:
- an observation mast (6) linked to the platform and comprising observation means (7) for observing the external environment,
- means (10) for processing output information from the observation means (7),
- viewing means (11) for viewing the environment linked to the means for processing information (10),
the observation means (7) comprising at least one digital window (8), comprising an optical system and a photographic sensor (13), secured to the external surface of one end (8) of the mast (6),
**characterized in that** the optical system (12) is a doublet formed by two lenses (14, 15) alongside each other, a first lens (14) being oriented toward the external environment and a second lens (15) being oriented toward the sensor (13), and
**in that** the second lens (15) is arranged alongside the sensor (13).

2. The device according to claim 1, **characterized in that** it comprises several digital windows (8) arranged around the mast (6) so as to cover a viewing field of 360° around that mast (6).

3. The device according to any one of claims 1 to 2, **characterized in that** the digital window (8) is adhered on the mast (6).

4. The device according to any one of claims 1 to 3, **characterized in that** the sensor (13) a charge coupled sensor (CCD).

5. The device according to any one of claims 1 to 4, **characterized in that** the optical system (16) is a multi-facet lens system.

6. The method according to any one of the claims 1 to 5, **characterized in that** the first lens (14) is made from polymethyl methacrylate.

7. A periscope of a naval platform, **characterized in that** it comprises at least one device according to any one of claims 1 to 6.

8. A naval platform, **characterized in that** it comprises at least one periscope according to claim 7.
